# EUROPEAN PATENT SPECIFICATION

(11) **EP 3 436 642 B1**
(45) Date of publication and mention of the grant of the patent: **12.02.2020**
(21) Application number: 17717526.2
(22) Date of filing: 03.03.2017
(51) Int. Cl.: E02D 7/18, B06B 1/16

(54) **SYSTEM AND METHOD FOR RUNNING VARIABLE MOTOR WITH TRANSMISSION OIL**
SYSTEM UND VERFAHREN ZUM BETREIBEN EINES VARIABLEN MOTORS MIT GETRIEBEÖL
SYSTÈME ET PROCÉDÉ POUR FAIRE FONCTIONNER UN MOTEUR VARIABLE AVEC UNE HUILE POUR TRANSMISSIONS

(30) Priority: 02.04.2016 TR 201604261
(43) Date of publication of application: 06.02.2019
(73) Proprietor: Ozkan, Aydin, 06930 Sincan / Ankara (TR)
(72) Inventor: Ozkan, Aydin, 06930 Sincan / Ankara (TR)
(74) Representative: Berkkam, Ayfer
(86) International application number: PCT/TR2017/000037
(87) International publication number: WO 2017/171673

(56) References cited:
- EP-A1- 0 524 056
- WO-A1-2013/136138
- DE-A1- 10 356 319
- US-A1- 2002 104 393

## Description

### Technical Field of the Invention

This invention is related to a system and method for running variable (phase changer) motor with a transmission (gear box) oil that enables running a phase change motor in closed loop with the transmission oil used in lubrication of the transmission of the hammer in vibratory pile hammer (vibro pile hammer) and pipe ramming machines.

### Background of the Invention

Vibratory pile hammers are used in many fields such as dams, bridges, residential areas, construction sites, offshore construction sites, infrastructure works and water and river rehabilitation operations. Ground reinforcement and consolidation operations are performed to enable the buildings and other structures to set on ground very strongly. In ground reinforcement operations, parts such as steel pipes, sheet pile and profiles are driven into the ground to support the structure. Vibratory pile hammers (vibro pile hammers) are used to drive the steel pipes and the pile sheets into the ground.

Vibro hammers (Pile hammer, Vibro hammer) are used in a wide range of fields to drive the parts such as steel formed pipes and profiles into the ground by being mounted on top of said parts and to remove them from the ground. Vibro hammers are transported with cranes or excavators (digging machines). The piped to be driven is mounted to the hammer. Vibro hammers drive the pipes or the profiles into the ground through the eccentric weights on itself. When it is required to drive a steel pipe into the ground, the pipe is positioned perpendicular to the ground, the vibro hammer is positioned on top and then said steel pipe is driven into the ground by the force created by vibration.

There are rotary gears in the vibration generating parts of the vibro hammers. There are semi-cylindrical eccentric weights on each of said gears. These weights create vibrations at different directions and amplitudes during rotation. To create vibration, a hydro-mechanical system called variable motor (phase changer motor) is used. The variable motor adjusts if the weights rotate in the same or different directions, in other words it enables if the vibro hammer creates vibration or not. In vibro hammers, the phase changer is moved by feeding hydraulic oil to the variable motor and phase is changed, that is the phase of the weight set is changed. Thus, the vibration used for driving operation is obtained.

In vibro hammers, hydraulic oil is used to run the variable motor that is to change the phase of the weight set. In vibro hammers, separate oil is used to run the variable motor. Besides using oil for running the variable motor, parts such as roller bearings, bearings and gears that can be named as transmission are also lubricated in vibro hammers. The oil used in running the variable motor is separate from the oil used for lubrication of the transmission, gears and roller bearings of the vibro hammer.

In the vibro hammers used in the current state of the art, there is a separate transmission lubrication system used for lubricating the transmission, gears, bearings and roller bearings of the vibro hammer and another oil system used for running the variable motor. While hydraulic oil (conventional mineral oil) is being used to run the variable motor, synthetic oil is used for lubrication of the transmission system. Separate hydraulic oil is circulated inside the vibro hammer for running the variable motor, and at the same time synthetic oil is circulated for the transmission system. In order to prevent two different oils from mixing inside the vibro hammer different lubrication conduits and sealing elements like seals are used. Since the vibro hammers are generally used in sites such as construction sites and building sites, they may eventually get affected by the external factors such as dust and dirt and depending on the use sealing elements may eventually experience wear. Said wear of the sealing elements causes the hydraulic oil (conventional mineral oil) used in the vibro hammer to mix with the transmission oil. Said mixing of hydraulic oil with the transmission oil due to sealing element wear is an important technical problem experienced in vibro hammers and pipe hammers. Mixing of the oils used in two separate lubrication systems, in other words mixing of the hydraulic oil used in the phase changer with the synthetic oil used in the transmission lubrication causes many technical problems. When the hydraulic oil used in the phase changer system mixes with the transmission oil, it damages the properties of the synthetic oil used in transmission lubrication and at the same time increases the oil level of the transmission.

In vibro hammers, synthetic oils are used for transmission (gearbox) lubrication. Synthetic oils are subjected to more advanced refining procedures and they are more pure and higher quality than the conventional mineral oils. In synthetic oils, the molecules that are individually present in the oil are prepared depending of the requirements of the transmission and the motor. The viscosity of the transmission oil used in vibro hammer transmissions is higher than normal oils and it is less fluid. Thus, it provides good bearing and lubrication.

Said oil leaks and mixing of the hydraulic oil with the synthetic oil experienced in currently used vibro hammers damage the synthetic oil used in the transmission system and cause the gears and the roller bearings to be worn in time. Another problem originating from the oil leaks experienced in vibro hammers is the rise of the oil level. When the hydraulic oil (conventional mineral oil) used in the variable motor leaks to the transmission oil, the oil level of the transmission system increases and causes the transmission system of the vibro hammer to fail and causes the transmission to be worn eventually since it damages the properties of the transmission oil. The oil leakage problem also causes a temperature rise on the transmission and vibro hammer bodies.

In the vibro hammers and pipe hammer machines of the current state of the art, there are some applications to prevent the variable motor oil from mixing with the transmission system oil. In order to solve said technical problem, it is aimed to fortify the sealing elements used in the oil used for running the variable motor and used in transmission lubrication. It is desired to prevent two different oils from mixing each other by the sealing elements used in the lubrication systems. However, said technique only delays the oil leakage, but does not solve the problem caused by oil leaks. A preferred implementation for solving said oil leakage problem is to replace the sealing elements in very frequent intervals. This solution increases the part and service costs and also causes the vibro hammer to be disassembled very frequently and remain idle without running.

In the United States patent document No.US20020104393 of the known state of the art, it is mentioned that the phase of two eccentric weight set of the variable moment vibratory driver is hydraulically changed by a transfer device. In said vibro hammer, there is no explanation about performing the lubrication of the variable motor and lubrication of the transmission parts with the same closed loop lubrication system. International Publication Number WO 2013/136138 A1 discloses a variable moment resonance-free vibro hammer which shows a dual-oil delivery system and the features of the preamble to claim 1.

In vibro hammers and pile driving machines used in the current state of the art, there is no implementation towards uniting the oil system used for running the variable motor and the transmission lubrication system as a closed loop conduit.

In present vibro hammers, there is no implementation towards using the oil used for transmission lubrication for running the variable motor in a closed loop conduit or towards how it can be done.

By the system subject matter of the application, a closed loop lubrication system is provided in vibro hammers and this lubrication system both lubricates the vibro hammer transmission system (gearbox components) and also the variable motor is run with the same oil. Thus, even if there is a leak between the variable motor running oil and transmission lubrication, it is not possible for the oil leak to damage the parts since the same oil is used in the system. Thanks to said patent, oil leak originated failures and oil leak originated transmission part wear is completely prevented in vibro hammers.

The patent of the invention provides a closed loop oil flow and the oil circulating in the closed loop both lubricates the parts of the transmission of the vibro hammer and the same oil runs the variable motor.

By the patent of the invention, two different oil systems, that is the transmission oil system and the variable motor oil system is performed by a single oil loop. By the patent of the invention, the variable motor is run with the synthetic oil used in the transmission. Thus, synthetic oil is used in the variable motor and the lifetime of the variable motor is extended by the contribution of the synthetic oil.

### Objects of the Invention

The object of this invention is to embody a system and method for running a variable motor with transmission oil that enables running a hydraulic variable motor with the oil of a transmission lubrication system and that can be used in any kind of vibro hammers and pipe driving machines.

Another object of this invention is to embody a system and method for running a variable motor with transmission oil that prevents the oil leaked to the transmission system from damaging the transmission parts when an oil leakage is experienced in the lubrication system of the variable motor in any kind of vibro hammers and pipe driving machines.

Another object of the invention is to embody a system and method for running a variable motor with transmission oil that can be used in any kind of vibro hammers and pipe driving machines, that lubricates the transmission through a closed loop lubrication system and that runs the variable motor by the same oil. Another object of the invention is to embody a system and method for running a variable motor with transmission oil that uses the hydraulic oil just for variable motor lubrication need warning signal and that does not use any hydraulic oil in the system for other purposes in any kind of vibro hammers and pipe driving machines.

Another object of the invention is to embody a system and method for running a variable motor with a transmission oil that uses the synthetic oil used for transmission lubrication of the vibro hammers and pipe driving machines for running the variable motor, thus that enables performing two different lubrication system as a single oil loop in a closed loop conduit.

### Brief Description of the Invention

By the system and method for running a variable motor with a transmission oil that is embodied to achieve the objects of the invention and that is defined in the independent claim and its dependent claims, a closed loop lubrication system is developed that runs the variable motor with the transmission's own lubrication oil in vibro hammers and pipe driving machines. The oil pump draws the oil under the transmission, preferably from a sump (oil pan); the drawn oil is conveyed to the control valve after being passed through a filter. If the phase changer is in use, the oil exits from the phase changer outlet of the control valve and circulates inside the phase changer. If the phase changer is not in use, the oil exits from the transmission outlet of the control valve, passes through a cooler, is used in the transmission lubrication system, returns to the oil pan and completes the oil circulation.

### Detailed Description of the Invention

The system and method for running a variable motor with transmission oil that is embodied to achieve the objects of the invention is shown in the appended figures, in which;

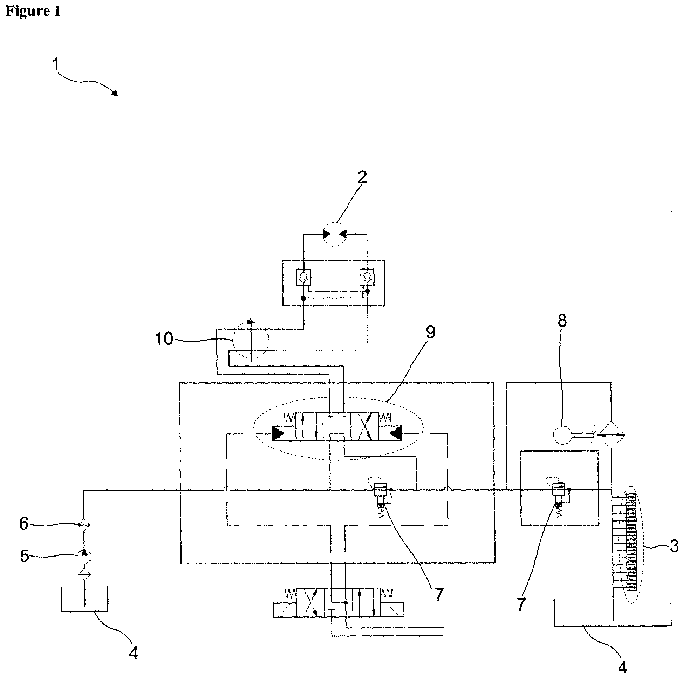

- **Figure 1**.: is the schematic view of the system for running the variable motor with the transmission oil.

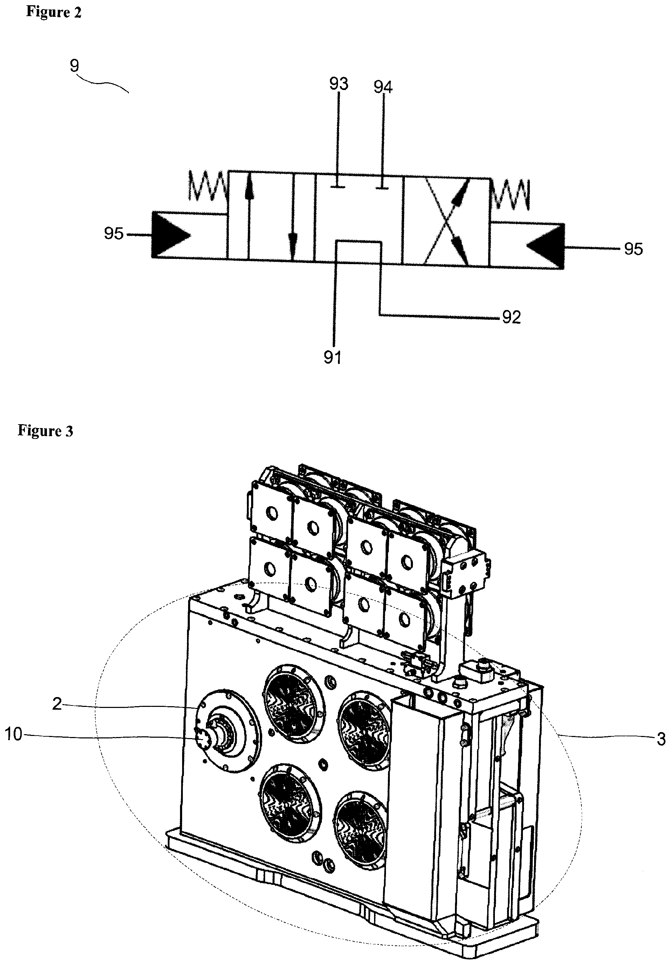

- **Figure 2.**: is the schematic view of the control valve.
- **Figure 3.**: is the perspective view of a vibro hammer and the transmission, variable motor and stator of the vibro hammer.

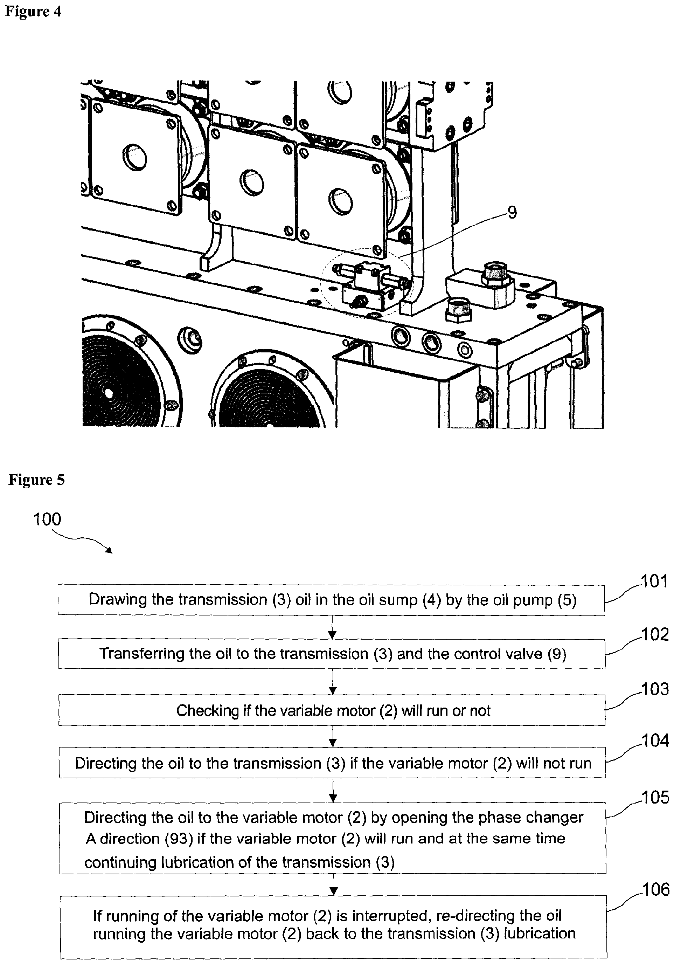

- **Figure 4.**: is a partial perspective view of a vibro hammer and the control valve.
- **Figure 5.**: is the flowchart of the steps of the method for running the variable motor with transmission oil.

The parts in the figures are individually assigned reference numbers and these numbers refer to:
**1.** System for running variable motor with transmission oil
**2.** Variable motor (phase changer motor)
**3.** Transmission (gear box)
**4.** Oil sump (oil pan)
**5.** Oil pump
**6.** Oil filter
**7.** Pressure regulator
**8.** Cooler
**9.** Control valve
   **91.**Oil inlet
   **92.**Oil outlet
   **93.**Phase changer A direction
   **94.**Phase changer B direction
   **95.** Pilot input
**10.** Stator
**100**.Method for running variable motor with transmission oil

The system for running variable motor with a transmission oil (1) that is used in vibro hammers and pipe driving machines, that performs transmission (3) lubrication by a closed loop oil system and that runs the variable motor (2) with the same oil comprises;
- at least one variable motor (2) that transfers power by feeding oil,
- at least one transmission (3) belonging to the vibro hammer or the pipe driving machine,
- at least one oil sump (4) in which the oil fed to the variable motor (2) and the transmission (3) is stored,
- at least one oil pump (5) that draws the oil in the oil sump (4) and that transfers the oil to the variable motor (2) ant the transmission (3) and that circulates the oil in the system,
- the control valve (9) comprising at least one oil inlet (91), at least one phase changer A direction (93) and at least one pilot inlet (95),
- at least one control valve (9), depending on the signal received from the pilot inlet (95), that directs the oil used in transmission (3) lubrication to the variable motor (2) to run the variable motor (2), that directs the oil running the variable motor (2) back to the transmission (3) lubrication and thus that is adapted to provide a closed loop oil circulation between the transmission (3) and the variable motor (2).

The system for running variable motor with transmission oil (1) according to the invention, a closed loop oil flow and oil circulation is provided between the variable motor (2) and the transmission (3) of the vibro hammer or the pipe driving machine. Therefore, only the transmission oil enters into the variable motor (2) and the transmission (3). The routing of the oil in the closed loop conduit of the system for running variable motor with transmission oil (1) is realized by the control valve (9). The routing of the oil inside the system for running variable motor with transmission oil (1) towards the transmission (3) lubrication and/or towards the variable motor (2) is performed by the control valve (9).

In one embodiment of the invention, the control valve (9) comprises at least one oil inlet (91), at least one oil outlet (92), at least one phase changer A direction (93), at least one phase changer B direction (94) and at least one pilot input (95). The oil used for transmission (3) lubrication enters to the oil input (91) located on the control valve (9). When the variable motor (2) is not running or in other words as long as it is not required to run the variable motor (2), the oil entering from the oil inlet (91) lubricates the transmission (3) by exiting from the oil outlet (92). As long as the variable motor (2) is not running, the oil inside the system is used for transmission (3) lubrication. When it is desired to run the variable motor (2), working signal is received by the pilot input (95) that is preferably located on the control valve (9). The control valve (9), depending on the signal received by the pilot input (95), transfers the oil required to run the variable motor (2) to the variable motor (2) by directing all or part of the oil received from the oil input (91) towards the phase changer A direction (93).When the variable motor (2) is going to be run, the control valve (9) directs the oil used in transmission (3) lubrication towards the variable motor (2) by opening the phase changer A direction (93). The oil running the variable motor (2) returns to the control valve (9), preferably to the phase changer B direction (94) located on the control valve (9). The amount of the oil entering and exiting the variable motor (2) is the same. The amount of the used oil does not drop. The control valve (9) provides a closed loop oil flow between the variable motor (2) and the transmission (3) by redirecting the same amount of oil coming from the variable motor (2) to the transmission (3) again.

If the oil coming to the control valve (9) will be directed towards the transmission (3) lubrication or towards the variable motor (3) or towards both of them is decided depending on the signal received preferably by the pilot input (95).

In one embodiment of the invention, a hydraulic oil input is connected to the pilot input (95). The hydraulic oil input is controlled by the vibro hammer or the pipe driving machine. When the variable motor (2) is required to run, oil is fed to the hydraulic oil input by the vibro hammer or the pipe driving machine and working signal of the variable motor (2) is conveyed to the pilot input (95). Depending on the working signal received from the pilot input (95), the control valve (9) runs the variable motor (2) by directing the oil from the transmission (3) oil or from the oil sump (4) to the variable motor (2) by opening the phase changer A direction (93).

In another embodiment of the invention, hydraulic oil input of a construction equipment such as an excavator or crane that carries the vibro hammer or the pipe driving machine is connected to the pilot input (95). The signal required to run the variable motor (2) is fed to the pilot input (95) by the hydraulic oil received from the construction equipment. The control valve (9), depending on the working signal received from the pilot input (95), runs the variable motor (2) by directing the oil from the transmission (3) oil or from the oil sump (4) to the variable motor (2) by opening the phase changer A direction (93).

In one embodiment of the invention, the pilot input (95) is controlled by an electrical signal. The electrical signal may be provided by a device such as a control unit, controller, PLC or computer.

The pilot input (95) only transmits the signal required to run the variable motor (2) to the control valve (9). The signal received from the pilot input (95) preferably by the hydraulic oil never enters into the system for running variable motor with transmission oil (1).

The control valve (9) is adapted to determine if the oil inside the system for running variable motor with transmission oil (1) will be used for transmission (3) lubrication, for running of the variable motor (2) or simultaneously both for transmission (3) lubrication and for running the variable motor (2). The control valve (9) provides a closed loop oil circulation for using the oil inside the system for running variable motor with transmission oil (1) to run the variable motor (2) and to lubricate the transmission (3).

Preferably synthetic, durable oil is used in the system for running variable motor with transmission oil (1). The oil inside the system for running variable motor with transmission (3) oil (1) is preferably stored inside the oil sump (4). The oil pump (5) circulates the oil in the oil sump (4) between the transmission (3) and the variable motor (2).

The oil pump (5) draws the oil inside the oil sump (4) and then feeds it to the variable motor (2) over transmission (3) and/or control valve (9). Thus, the oil pump (5) ensures that the oil is circulated in a closed loop oil conduit.

In one embodiment of the invention, the system for running variable motor with transmission oil (1) comprises at least one oil filter (6). The oil filter (6) filters the oil exiting the oil sump (4) and filters the undesired materials such as dirt and dust in the oil. One or more than one oil filters (6) may be used inside the system for running variable motor with transmission oil (1).

In one embodiment of the invention, the system for running variable motor with transmission oil (1) comprises at least one pressure regulator (7). The pressure regulator (7) ensures that the oil pressure remains in the preferred pressure range. The oil pressure is reduced or increased to the desired pressure level by the pressure regulator (7).

In one embodiment of the invention, the system for running variable motor with transmission oil (1) comprises at least two pressure regulators (7). One of the pressure regulators (7) regulates the oil pressure transmitted to the variable motor (2). The other pressure regulator (7) adjusts the oil pressure directed to transmission (3) lubrication. The pressure value of the pressure regulators (7) is determined depending on the power of the vibro hammers or pipe driving machines, the power of the variable motor (2) and the size of the roller bearings, bearings and gears used in the transmission (3).

By the pressure regulators (7), the oil circulating in the system for running variable motor with transmission oil (1) can be fed to the variable motor (2) at a different pressure and can be fed to the transmission (3) at a different pressure. The pressure regulators (7) enable obtaining oil at different pressure values inside the closed loop oil flow.

In one embodiment of the invention, the system for running variable motor with transmission oil (1) comprises at least one cooler (8). The cooler (8) enables cooling the oil circulating in the system for running variable motor with transmission oil (1) to a preferred temperature. The oil used to run the variable motor (2) and the oil used in lubrication of the transmission (3) may warm up. The cooler (8) enables cooling the warmed oil and lets the oil to be used in the system without losing its properties.

In one embodiment of the invention, the system for running variable motor with transmission oil (1) comprises at least one stator (10). The stator (10) is preferably located between the control valve (9) and the variable motor (2). The stator (10) enables directing the oil coming from the control valve (9) towards the preferred oil input of the variable motor (2). The stator (10) preferably comprises at least two oil passage channels. The oil going towards the variable motor (2) enters the variable motor (2) after passing through said oil passage channels. The stator (10) enables directing the oils towards preferred lines without being mixed to each other by rotating at very high revolutions.

The system for running variable motor with transmission oil (1) comprises at least one variable motor (2). The variable motor (2) is run by feeding oil to the variable motor (2) and in this way the power is transferred. The working direction of the variable motor (2) can be reversed by changing the oil inputs. The power transfer is started by running the variable motor (2) and the vibration required to drive the parts such as pipes and profiles is obtained. The direction of the vibration is controlled by changing the working direction of the variable motor (2). The variable motor (2) provides the power and the vibration used for driving operations in vibro hammers or pile/pipe driving machines (pile drivers). The variable motor (2) is one of the most important parts of the vibro hammers and the pipe driving machines.

The system for running variable motor with transmission oil (1) comprises at least one transmission (3). The transmission (3) is the component that enables functioning of the vibro hammer or the pipe driving machine. The transmission (3) comprises the gears, roller bearings and the bearings that enables functioning of the vibro hammer or the pipe driving machine. Depending on the size of the vibro hammer or the pipe driving machine, the size of the transmission (3), number of transmission parts, their structure and size also change.

The system for running variable motor with transmission oil (1) of the invention works as described below. The oil pump (5) feeds the oil in the oil sump (4) to the transmission (3) and the control valve (9) after preferably passing it through the oil filter (6). As long as the vibro hammer or the pipe driving machine is running, the oil lubricates the transmission (3) and transmission (3) lubricates the parts. When it is desired to drive a pipe by the vibro hammer or the pipe driving machine, in other words when it is required to run the variable motor (2), preferably a signal is sent to the pilot input (95) of the control valve (9). The signal received by the pilot input (95) is transmitted by the vibro hammer or the pipe driving machine or the excavator or the crane or the operator. The phase changer A direction (93) on the control valve (9) is opened by the signal received in the pilot input (95) and the oil used for transmission (3) lubrication is directed to the variable motor (2). The oil passed through the phase changer A direction (93) of the control valve (9) enters to the variable motor (2) by preferably passing through the stator (10). Thus, the variable motor (2) starts running and producing the power required to drive the parts such as pipes and profiles. The transmission (3) oil used to run the variable motor (2) re-circulates back to the phase changer B direction (94) of the controller (9) and re-enters into oil circulation. The oil coming from the variable motor (2) preferably passes through the cooler (8) and re-enters into the oil circulation. The pressure of the oil used in the system for running variable motor with transmission oil (1) can be adjusted to the preferred pressure by the pressure regulators (7). In this way the variable motor (2) is run with the oil used in the transmission (3) of the vibro hammer or pipe driving machines and the transmission (3) is again lubricated by the oil used to run the variable motor (2).

By the system for running variable motor with transmission oil (1), running the hydraulic variable motor (2) with the lubricating oil of the transmission (3) system in vibro hammers and pipe driving machines is performed by a closed loop oil circulation. Thus, the possibility of mixing oil other than the transmission (3) oil into the transmission (3) is completely eliminated.

In the system for running variable motor with transmission oil (1), the hydraulic oil is only used for the variable motor (2) lubrication need warning signal and other than that no hydraulic oil enters into the oil circulation. Since said oil is outside the transmission, there is no mixing possibility.

The working and control of the system for running variable motor with transmission oil (1) is established by the method for running variable motor with transmission oil (100).

The method for running variable motor with transmission oil (100) that is used in vibro hammers or pipe driving machines, that lubricates the transmission (3) by a closed loop oil system and that runs the variable motor (2) by the same oil comprises the steps of;
- drawing (sucking) the transmission (3) oil in the oil sump (4) by the oil pump (5) (101),
- transfer of oil to the transmission (3) and the control valve (9) (102)
- checking if the variable motor (2) will be run or not by the control valve (9) (103),
- if the variable motor (2) will not run, directing the oil to the transmission (3) by the control valve (9) (104),
- if the variable motor (2) will run, opening the phase changer A direction (93), directing the oil to the variable motor (2) and simultaneously continuing lubrication of the transmission (3) (105),
- when the variable motor (2) stops running, re-directing the oil running the variable motor (2) back to the transmission (3) lubrication (106).

By the method for running variable motor with transmission oil (100), the oil used in the transmission (3) lubrication is also used for running the variable motor (2). By the method for running variable motor with transmission oil (100), a closed loop lubrication system is controlled between the variable motor (2) and the transmission (3), it is enabled that the same oil is used for both transmission (3) lubrication and for running the variable motor (2). Thus, by circulating only the transmission (3) oil between the variable motor (2) and the transmission (3), mixing of different oil into the transmission (3) is prevented.

In the method for running variable motor with transmission oil (100), the oil inside the oil sump (3) is drawn by the oil pump (5) (101). The oil drawn from the oil sump (4) is cleaned by passing through the oil filter (6).

The oil pump (5) transfers the oil drawn from the oil sump (4) to the transmission (3) and the control valve (9). The oil drawn from the oil sump (4) is preferably passed through the pressure regulators (7) after being filtered. The pressure regulators (7) increase or decrease the oil pressure to the pressure preferred for transmission (3) lubrication or to the pressure preferred for running the variable motor (2). The pressure of the oil passed through the pressure regulators (7) is adjusted to the preferred level and that transferred to the transmission (3) or to the control valve (9). The transmission (3) is lubricated by the oil transferred to the transmission (3).

The running of the variable motor (2) is enabled by the control valve (9). Running of the variable motor (2) is controlled by the signal received from the pilot input (95) located on the control valve (9). The control valve (9) controls if the variable motor (2) will run or not (103). The control valve (9) does not transfer oil to the variable motor (2) unless it does not receive the working signal from the pilot input (95). If the variable motor (2) will not run, the control valve (9) re-directs the oil back to the transmission (3) (104). The transmission (3) is lubricated by the oil directed to the transmission (3) or the oil waits in the oil sump (4).

When the signal required to run the variable motor (2) reaches the pilot input (95) located on the control valve (9), the control valve (9) senses that the variable motor (2) needs to run. The control valve (9), if the variable motor (2) will run, enables directing the oil to the variable motor (2) by opening the phase changer A direction and at the same time enables continuing lubrication of the transmission (3) (105). While the oil is being transferred to the transmission (3) lubrication from the oil outlet (92) located on the control valve (9), the same oil is also transferred to the variable motor (2) through the phase changer A direction (93). In this way, the control valve (9) provides a closed loop oil flow between the transmission (3) and the variable motor (2) by incorporating the variable motor (2) to the oil flow between the transmission (3) and the oil sump (4). The oil exiting the control valve (9) preferably passes through the stator (10) and runs the variable motor (2) over the stator (10).

When the signal received from the pilot input (95) is interrupted, the control valve (9) senses that the variable motor (2) completes its run. When the variable motor (2) stops running, the control valve (9) directs the oil running the variable motor (2) to the transmission (3) lubrication or to the oil sump (4) (106). When the oil coming from the variable motor (2) warms up, the cooler (8) decreases the oil back to the preferred temperature.

The control valve (9), depending on the signal received from the pilot input (95), directs the oil used in transmission (3) lubrication to the variable motor (2) to run the variable motor (2) and enables a closed loop oil flow between the transmission (3) and the variable motor (2) by re-directing the oil running the variable motor (2) back to the transmission (3) lubrication.

## Claims

1. A system for running variable motor with transmission oil (1) that is used in vibro hammers and pipe/pile driving machines, that performs transmission (3) lubrication by a closed loop oil system and that enables running the variable motor (2) with the same oil, **comprising;**
- at least one variable motor (2) that transfers power by feeding oil,
- at least one transmission (3) belonging to the vibro hammer or the pipe driving machine,
- at least one oil sump (4) in which the oil fed to the variable motor (2) and the transmission (3) is stored,
- at least one oil pump (5) that draws the oil in the oil sump (4) and that transfers the oil to the variable motor (2) ant the transmission (3) and that circulates the oil in the system,
**characterized by;**
- the control valve (9) comprising at least one oil inlet (91), at least one phase changer A direction (93) and at least one pilot inlet (95),
- at least one control valve (9), depending on the signal received from the pilot inlet (95), that directs the oil used in transmission (3) lubrication to the variable motor (2) to run the variable motor (2), that directs the oil running the variable motor (2) back to the transmission (3) lubrication and thus that is adapted to provide a closed loop oil circulation between the transmission (3) and the variable motor (2).

2. A system for running variable motor with transmission oil (1) according to Claim 1, **characterized by** the control valve (9) that is adapted to direct the oil drawn from the oil sump (4) to the transmission (3) lubrication or to the variable motor (2) or to direct the drawn oil to the transmission (3) lubrication and to the variable motor (2).

3. A system for running variable motor with transmission oil (1) according to Claim 1, **characterized by** the control valve (9) that comprises oil inlet (91), at least one oil outlet (92), phase changer A direction (93), at least one phase changer B direction (94) and pilot input (95).

4. A system for running variable motor with transmission oil (1) according to Claim 1, **characterized by** the control valve adapted direct the oil used for transmission (3) lubrication and entering the oil input (91) towards the transmission (3) lubrication or towards the oil sump (4) from the oil outlet (92) when the variable motor (2) is not running.

5. A system for running variable motor with transmission oil (1) according to Claim 1, **characterized by** the control valve (9) that is adapted to enable transfer of the oil required for running the variable motor (2) to the variable motor (2) by directing all or part of the transmission (3) oil coming from the oil input (91) towards the phase changer A direction (93).

6. A system for running variable motor with transmission oil (1) according to Claim 3, **characterized by** the phase changer B direction (94) that is located on the control valve (9) and that enables the oil running the variable motor (2) to re-enter the control valve (9).

7. A system for running variable motor with transmission oil (1) according to Claim 1, **characterized by** the control valve (9) adapted to enable a closed loop oil flow between the variable motor (2) and the transmission (3) by directing the oil coming from the variable motor (2) back to the transmission (3) lubrication and depending on the signal received preferably from the pilot input (95), adapted to decide if the incoming oil will be directed to the transmission (3) lubrication, to the variable motor (2) or to both of them.

8. A system for running variable motor with transmission oil (1) according to Claim 1, **characterized by** the pilot input (95) that contains hydraulic oil input and that receives the working signal of the variable motor (2) when oil is fed to the hydraulic oil input by the vibro hammer or the pipe driving machine when the variable motor will be run and that receives the working signal of the variable motor (2) by the hydraulic oil fed from the construction equipment when the variable motor (2) will be run.

9. A system for running variable motor with transmission oil (1) according to Claim 1, **characterized by** the pressure regulator (7) that enables obtaining oil at different pressure values inside the closed loop oil flow and adjusting the oil pressure directed towards the variable motor (2) to a preferred value and adjusting the pressure level directed towards the transmission (3) lubrication to a preferred value.

10. A system for running variable motor with transmission oil (1) according to Claim 1, **characterized by** the movable stator (10) that is located between the control valve (9) and the variable motor (2) and that enables directing the oil coming from the control valve (9) towards the preferred oil input of the variable motor (2) and
the variable (phase changer) motor (2) that has at least two oil inputs, of which the working direction can be changed by changing the oil inputs and that provides the vibration required to drive the pipe and profile parts by starting power transfer when operated and
the transmission (3) that enables operation of the vibro hammer or the pipe driving machine and that comprises gears, roller bearings and bearings.

11. A method for running variable motor with transmission oil (100) that is used in vibro hammers and pipe driving machines, that enables performing transmission (3) lubrication by a closed loop oil system and that enables running the variable motor (2) with the same oil, **characterized by** comprising the steps of;
- drawing (sucking) the transmission (3) oil in the oil sump (4) by the oil pump (5) (101),
- transfer of oil to the transmission (3) and the control valve (9) (102)
- checking if the variable motor (2) will be run or not by the control valve (9) (103),
- if the variable motor (2) will not run, directing the oil to the transmission (3) by the control valve (9) (104),
- if the variable motor (2) will run, opening the phase changer A direction (93), directing the oil to the variable motor (2) and simultaneously continuing lubrication of the transmission (3) (105),
- when the variable motor (2) stops running, re-directing the oil running the variable motor (2) back to the transmission (3) lubrication (106).

12. A method for running variable motor with transmission oil (100) according to Claim 11, **characterized by,** in the step of directing the oil towards the transmission (3) and the control valve (9) (102), passing the oil through the pressure regulators (7) and adjusting to the pressure preferred for transmission (3) lubrication and to the pressure preferred for running the variable motor (2).

13. A method for running variable motor with transmission oil (100) according to Claim 11, **characterized by** not directing oil to the variable motor (2) unless a working signal is received from the pilot input (95), in the step of directing the oil towards the transmission (3) by the control valve (9) (104), if the variable motor (2) will not run.

14. A method for running variable motor with transmission oil (100) according to Claim 11, **characterized by** directing the oil transferred to the transmission (3) lubrication from the oil output (92) also towards the variable motor (2) over the phase changer A direction (93), in the step of directing the oil towards the variable motor (2) by opening the phase changer A direction (93) and at the same continuing the transmission (3) lubrication (105), if the variable motor (2) will run.

15. A method for running variable motor with transmission oil (100) according to Claim 11, **characterized by** transferring the oil coming from the variable motor towards the transmission (3) or towards the oil sump (4) after being cooled, in the step of directing the oil running the variable motor (2) back to the transmission (3) lubrication or to the oil sump (4) (106), when the running of the variable motor (2) is interrupted.

## Patentansprüche

1. Ein System zum Antreiben des variablen Motors mit Getriebeöl (1), das in Vibrationshämmern und in Rammmaschinen für Rohren/Pfosten verwendet wird, wobei das System das Getriebe (3) mittels eines geschlossenen Ölkreislaufs schmiert und dem variablen Motor (2) ermöglicht, mit demselben Öl zu arbeiten, umfassend:
- mindestens ein variabler Motor (2), der die Kraft durch Ölzufuhr überträgt,
- mindestens ein Getriebe (3) in dem Vibrationshammer oder in der Rammmaschine für Rohren,
- mindestens eine Ölwanne (4), in der das dem variablen Motor (2) und dem Getriebe (3) zugeführte Öl gespeichert ist,
- mindestens eine Ölpumpe (5), die das Öl in die Ölwanne (4) ansaugt und das Öl zum variablen Motor (2) und zum Getriebe (3) befördert und für die Ölzirkulation im System sorgt,
**gekennzeichnet durch**
- das Steuerventil (9), das mindestens einen Öleinlass (91), mindestens einen Phasenumrichter (93) in Richtung A und mindestens einen Piloteingang (95) beinhaltet,
- mindestens ein Steuerventil (9), das in Abhängigkeit von dem vom Piloteingang (95) empfangenen Signal das bei der Schmierung des Getriebes (3) verwendete Öl zum variablen Motor (2) leitet, um den variablen Motor (2) anzutreiben, das den variablen Motor (2) antreibende Öl für Ölschmierung des Getriebes (3) zurückleitet und somit geeignet ist, einen geschlossenen Ölkreislauf zwischen dem Getriebe (3) und dem variablen Motor (2) zu ermöglichen.

2. Ein System zum Antreiben des variablen Motors mit Getriebeöl (1) nach Anspruch 1, **gekennzeichnet durch** das Steuerventil (9), das geeignet ist, das aus der Ölwanne (4) angesaugte Öl zur Schmierung zum Getriebe (3) oder zum variablen Motor (2) zu leiten oder das angesaugte Öl zur Schmierung zum Getriebe (3) und zum variablen Motor (2) zu leiten.

3. Ein System zum Antreiben des variablen Motors mit Getriebeöl (1) nach Anspruch 1, **gekennzeichnet durch** das Steuerventil (9), das einen Öleinlass (91), mindestens einen Ölauslass (92), einen Phasenumrichter (93) in Richtung A (93), mindestens einen Phasenumrichter (94) in Richtung B und Piloteingang (95) aufweist.

4. Ein System zum Antreiben des variablen Motors mit Getriebeöl (1) nach Anspruch 1, **gekennzeichnet durch** das Steuerventil, das geeignet ist, das zur Schmierung des Getriebes (3) verwendete und in den Öleingang (91) eintretende Öl zur Schmierung des Getriebes (3) oder vom Ölauslass (92) zu der Ölwanne (4) zu leiten, wenn der variable Motor (2) nicht angetrieben wird.

5. Ein System zum Antreiben des variablen Motors mit Getriebeöl (1) nach Anspruch 1, **gekennzeichnet durch** das Steuerventil (9), das geeignet ist, die Übertragung des zum Antreiben des variablen Motors (2) erforderlichen Öles auf den variablen Motor (2) zu ermöglichen, indem das Öl des Getriebes (3) aus dem Öleingang (91) ganz oder teilweise zum Phasenumrichter (93) in Richtung A geleitet wird.

6. Ein System zum Antreiben des variablen Motors mit Getriebeöl (1) nach Anspruch 3, **gekennzeichnet durch** den Phasenumrichter (94) in Richtung B, der sich am Steuerventil (9) befindet und es ermöglicht, dass das den variablen Motor (2) antreibende Öl in das Steuerventil (9) wieder eingeführt wird.

7. Ein System zum Antreiben des variablen Motors mit Getriebeöl (1) nach Anspruch 1, **gekennzeichnet durch** das Steuerventil (9), das geeignet ist, einen geschlossenen Ölkreislauf zwischen dem Getriebe (3) und dem variablen Motor (2) zu ermöglichen, wobei das Öl vom variablen Motor (2) zur Schmierung des Getriebes (3) geleitet wird, und vorzugsweise geeignet ist, in Abhängigkeit von dem vom Piloteingang (95) empfangenen Signal darüber zu entscheiden, ob das eingeführte Öl zur Schmierung des Getriebes (3), zum variablen Motor (2) oder zu den beiden geleitet wird.

8. Ein System zum Antreiben des variablen Motors mit Getriebeöl (1) nach Anspruch 1, **gekennzeichnet durch** den Piloteingang (95), der einen Hydrauliköleingang enthält und das Arbeitssignal des variablen Motors (2) empfängt, wenn das Öl, als der variable Motor angetrieben wird, durch den Vibrationshammer oder die Rammmaschine für Rohren in den Hydrauliköleingang eingeführt wird, und der das Arbeitssignal des variablen Motors (2) durch das von dem Konstruktionsequipment zugeführte Hydrauliköl empfängt, als der variable Motor (2) angetrieben wird.

9. Ein System zum Antreiben des variablen Motors mit Getriebeöl (1) nach Anspruch 1, **gekennzeichnet durch** den Druckregler (7), der es ermöglicht, Öl mit unterschiedlichen Druckwerten innerhalb des Ölkreislaufs zu erhalten und den auf variablen Motor (2) gerichteten Öldruck auf einen bevorzugten Wert einzustellen und das Niveau des auf die Schmierung des Getriebes (3) gerichteten Druckes auf einen bevorzugten Wert einzustellen.

10. Ein System zum Antreiben des variablen Motors mit Getriebeöl (1) nach Anspruch 1, **gekennzeichnet dadurch, dass** es den beweglichen Stator (10) umfasst, der zwischen dem Steuerventil (9) und dem variablen Motor (2) angeordnet ist und ermöglicht, das Öl vom Steuerventil (9) zum bevorzugten Öleingang zu führen, und
dass es den variablen Motor (Phasenumrichter) (2) mit mindestens zwei Öleinlässen umfasst, dessen Arbeitsrichtung durch das Ändern der Öleingänge geändert werden kann, und der die erforderliche Vibration zum Einschlagen von Rohr- und Profilteilen durch Starten der Kraftübertragung bereitstellt und
dass es das Getriebe (3) umfasst, das den Betrieb des Vibrationshammers oder der Rammmaschine für Rohren ermöglicht und Zahnräder, Rollenlager und Lager aufweist.

11. Ein Verfahren zum Antreiben des variablen Motors mit Getriebeöl (100), das in Vibrationshämmern und in Rammmaschinen für Rohren verwendet wird, und das die Schmierung des Getriebes (3) durch ein Ölsystem mit geschlossenem Kreislauf ermöglicht, und das dem variablen Motor (2) ermöglicht, mit demselben Öl zu arbeiten, **gekennzeichnet durch** die folgenden Schritte:
- das Öl des Getriebes (3) in der Ölwanne (4) mittels Ölpumpe (5) ansaugen (101),
- das Öl zum Getriebe (3) und zum Steuerventil (9) übertragen (102),
- prüfen (103), ob der variable Motor (2) mittels Steuerventil (9) angetrieben wird,
- falls der variable Motor (2) nicht angetrieben wird, dann das Öl mittels Steuerventil (9) zum Getriebe (3) leiten (104),
- falls der variable Motor (2) nicht angetrieben wird, dann die Richtung A des Phasenumrichters (93) öffnen, das Öl zum variablen Motor (2) leiten und gleichzeitig die Schmierung des Getriebes (3) fortsetzen (105),
- falls der variable Motor (2) gestoppt wird, dann das Öl, das den variablen Motor (2) antreibt, zur Schmierung des Getriebes (3) zurückgeführt (106).

12. Ein Verfahren zum Antreiben des variablen Motors mit Getriebeöl (100) nach Anspruch 11, **gekennzeichnet dadurch, dass** das Öl in dem Schritt (102), in dem das Öl zum Getriebe (3) und zum Steuerventil (9) übertragen wird, durch den Druckregler (7) geleitet und auf den für Schmierung des Getriebes (3) bevorzugten Druck und auf den für den Antrieb des variablen Motors (2) bevorzugten Druck eingestellt wird.

13. Ein Verfahren zum Antreiben des variablen Motors mit Getriebeöl (100) nach Anspruch 11, **gekennzeichnet dadurch, dass** das Öl in dem Schritt (104), in dem das Öl mittels Steuerventil (9) zum Getriebe (3) geleitet wird, falls der variable Motor (2) nicht angetrieben wird, nicht zum variablen Motor (2) geführt wird, es sei denn, ein Betriebssignal wird vom Einlass (95) empfangen.

14. Ein Verfahren zum Antreiben des variablen Motors mit Getriebeöl (100) nach Anspruch 11, **gekennzeichnet dadurch, dass** das Öl in dem Schritt (105), in dem das vom Ölauslass (92) zur Schmierung auf das Getriebe (3) übertragene Öl zum variablen Motor (2) geleitet wird, falls die Richtung A des Phasenumrichters (93) geöffnet und gleichzeitig der variable Motor (2) nicht angetrieben wird, durch Fortsetzung der Schmierung des Getriebes (3) über die Richtung A des Phasenumrichters (93) gleichzeitig zum variablen Motor (2) geleitet wird.

15. Ein Verfahren zum Antreiben des variablen Motors mit Getriebeöl (100) nach Anspruch 11, **gekennzeichnet dadurch, dass** das Öl aus dem variablen Motor in dem Schritt (106), in dem das den variablen Motor (2) antreibende Öl zur Schmierung des Getriebes (3) oder zur Ölwanne (4) zurückgeleitet wird, falls der variable Motor (2) gestoppt wird, nach dem Abkühlen zum Getriebe (3) oder zur Ölwanne (4) zurückgeführt wird.

## Revendications

1. Un système permettant de faire fonctionner un moteur variable avec de l'huile de transmission (1) qui est utilisé dans les marteaux à vibration et les machines à entraîner des tubes/ pieux, effectuant la lubrification de la transmission (3) par un système d'huile en boucle fermée et permettant de faire fonctionner le moteur variable (2) avec la même huile, comprenant:
- au moins un moteur variable (2) qui transfère la puissance en alimentant en huile,
- au moins une transmission (3) appartenant au marteau à vibration ou à la machine à entraîner des tuyaux,
- au moins un carter d'huile (4) dans lequel la transmission (3) et l'huile alimentée au moteur variable (2) sont stockées,
- au moins une pompe à huile (5) qui aspire l'huile dans le carter d'huile (4) et qui transfère l'huile au moteur variable (2) et à la transmission (3) et qui permet de faire circuler l'huile dans le système,
**caractérisé en ce que**;
- la vanne de commande (9) comprend au moins une entrée d'huile (91), au moins un changeur de phase A (93) et au moins une entrée pilote (95),
- au moins une vanne de commande (9), en fonction du signal reçu de l'entrée pilote (95), qui dirige l'huile utilisée dans la lubrification de la transmission (3) vers le moteur variable (2) permettant de faire fonctionner le moteur variable (2), qui dirige l'huile faisant tourner le moteur variable (2) vers la lubrification de la transmission (3) et qui est adaptée pour fournir une circulation d'huile en boucle fermée entre la transmission (3) et le moteur variable (2).

2. Système pour faire fonctionner un moteur variable avec de l'huile de transmission (1) selon la revendication 1, **caractérisé par** la vanne de commande (9) qui est adaptée pour diriger l'huile tirée du carter d'huile (4) vers la lubrification de la transmission (3) ou vers le moteur variable (2) ou pour diriger l'huile aspirée vers la lubrification de la transmission (3) et vers le moteur variable (2).

3. Système pour faire fonctionner un moteur variable avec de l'huile de transmission (1) selon la revendication 1, **caractérisé par** la vanne de commande (9) comprenant une entrée d'huile (91), au moins une sortie d'huile (92), un changeur de phase dans le sens A (93), au moins un sens de changement de phase B (94) et une entrée pilote (95).

4. Système pour faire fonctionner un moteur variable avec de l'huile de transmission (1) selon la revendication 1, **caractérisé par** la vanne de commande adaptée pour diriger l'huile utilisée pour la lubrification de la transmission (3) et entrer dans l'entrée d'huile (91) vers la lubrification de la transmission (3) ou vers le carter d'huile (4) de la sortie d'huile (92) lorsque le moteur variable (2) ne fonctionne pas.

5. Un système pour faire fonctionner un moteur variable avec de l'huile de transmission (1) selon la revendication 1, **caractérisé par** la vanne de commande (9) qui est adaptée pour permettre le transfert de l'huile nécessaire pour faire fonctionner le moteur variable (2) au moteur variable (2) en dirigeant tout ou partie de la transmission (3) de l'huile provenant de l'entrée d'huile (91) vers le sens du changeur de phase A (93).

6. Système pour faire fonctionner un moteur variable avec de l'huile de transmission (1) selon la revendication 3, **caractérisé par** le sens de changement de phase B (94) qui prend place sur la vanne de commande (9) et qui permet à l'huile de faire fonctionner le moteur variable (2), d'entrer à nouveau dans la vanne de commande (9).

7. Système pour faire fonctionner un moteur variable avec de l'huile de transmission (1) selon la revendication 1, **caractérisé par** la vanne de commande (9) qui est adaptée afin de permettre un écoulement d'huile en boucle fermée entre le moteur variable (2) et la transmission (3) en dirigeant l'huile provenant du moteur variable (2) en retour à la lubrification de la transmission (3) et en fonction du signal reçu de préférence de l'entrée pilote (95), qui est adaptée pour décider si l'huile entrante sera dirigée vers la lubrification de la transmission (3), au moteur variable (2) ou bien aux deux.

8. Un système pour faire fonctionner un moteur variable avec de l'huile de transmission (1) selon la revendication 1, **caractérisé par** l'entrée pilote (95) qui contient une entrée d'huile hydraulique et qui reçoit le signal de fonctionnement du moteur variable (2) lorsque l'huile est envoyée à l'hydraulique d'entrée d'huile par le marteau à vibration ou la machine à entraîner des tuyaux lorsque le moteur variable fonctionnera et qui reçoit le signal de fonctionnement du moteur variable (2) par l'huile hydraulique fournie par l'équipement de construction lorsque le moteur variable (2) fonctionnera.

9. Un système pour faire fonctionner un moteur variable avec de l'huile de transmission (1) selon la revendication 1, **caractérisé par** le régulateur de pression (7) qui permet d'obtenir de l'huile à différentes valeurs de pression à l'intérieur du débit d'huile en boucle fermée et de régler la pression d'huile dirigée vers le moteur variable (2) à une valeur préférée et le réglage du niveau de pression dirigé vers la lubrification de la transmission (3) à une valeur préférée.

10. Un système de fonctionnement de moteur variable avec huile de transmission (1) selon la revendication 1, **caractérisé par** le stator mobile (10) qui se trouve entre la vanne de commande (9) et le moteur variable (2) et qui permet de diriger l'huile provenant de la vanne de commande (9) vers l'entrée d'huile préférée du moteur variable (2), et
le moteur variable (changeur de phase) (2) qui a au moins deux entrées d'huile, dont la direction de fonctionnement peut être modifiée en changeant les entrées d'huile et qui fournit la vibration requise pour entraîner le tuyau et les pièces de profil en démarrant le transfert de puissance lorsqu'il est utilisé, et
la transmission (3) qui permet le fonctionnement du marteau à vibration ou de la machine d'entraînement de tuyaux et qui comprend des engrenages, des roulements à rouleaux et des roulements.

11. Un procédé pour faire fonctionner un moteur variable avec de l'huile de transmission (100) utilisé dans des marteaux à vibration et des machines à entraîner des tuyaux, qui permet d'effectuer la lubrification de la transmission (3) par un système d'huile en boucle fermée et qui permet de faire fonctionner le moteur variable (2) avec la même huile, **caractérisée en ce qu'**il comprend les étapes de;
- aspirer (101) l'huile de transmission (3) dans le carter d'huile (4) par la pompe à huile (5),
- transférer (102) l'huile vers la transmission (3) et la vanne de commande (9),
- vérifier (103) si le moteur variable (2) sera actionné ou non par la vanne de commande (9),
- dans le cas où le moteur variable (2) ne fonctionne pas, diriger (104) l'huile vers la transmission (3) par la vanne de commande (9),
- dans le cas où le moteur variable (2) fonctionne, ouvrir le sens du changeur de phase A (93), diriger l'huile vers le moteur variable (2) et continuer (105) simultanément la lubrification de la transmission (3),
- lorsque le moteur variable (2) cesse de fonctionner, rediriger (106) l'huile faisant tourner le moteur variable (2) vers la lubrification de la transmission (3).

12. Un procédé pour faire fonctionner un moteur variable avec de l'huile de transmission (100) selon la revendication 11, **caractérisé par,** dans l'étape de diriger (102) l'huile vers la transmission (3) et la vanne de commande (9), le passage de l'huile à travers les régulateurs de pression (7) et le réglage à la pression préférée pour la lubrification de la transmission (3) et à la pression préférée pour faire fonctionner le moteur variable (2).

13. Un procédé pour faire fonctionner un moteur variable avec de l'huile de transmission (100) selon la revendication 11, **caractérisé en ce que** l'on ne dirige pas l'huile vers le moteur variable (2) à moins qu'un signal de fonctionnement ne soit reçu de l'entrée pilote (95) dans l'étape de conduite de l'huile vers la transmission (3) par la vanne de commande (9) (104), dans le cas où le moteur variable (2) ne sera pas en état de fonctionnement.

14. Un procédé pour faire fonctionner un moteur variable avec de l'huile de transmission (100) selon la revendication 11, **caractérisé par** la direction de l'huile transférée vers la lubrification de la transmission (3) depuis la sortie d'huile (92) également vers le moteur variable (2) sur la phase changeur de direction A (93), dans l'étape de conduite de l'huile vers le moteur variable (2) en ouvrant le changeur de phase de direction A (93) et en même temps continuer (105) la lubrification de la transmission (3), si le moteur variable (2) ne sera pas en état de fonctionnement.

15. Un procédé pour faire fonctionner un moteur variable avec de l'huile de transmission (100) selon la revendication 11, **caractérisé par** le transfert de l'huile provenant du moteur variable vers la transmission (3) ou vers le carter d'huile (4) après refroidissement, à l'étape de retour (106) de l'huile faisant tourner le moteur variable (2) vers la lubrification de la transmission (3) ou vers le carter d'huile (4), lorsque le fonctionnement du moteur variable (2) est arrêté.
